# EUROPÄISCHE PATENTANMELDUNG

(11) **EP 3 257 816 A1**
(43) Veröffentlichungstag der Anmeldung: **20.12.2017**
(21) Anmeldenummer: 16001339.7
(22) Anmeldetag: 14.06.2016
(51) Int. Cl.: C01G 23/053, B01D 53/00, B01J 21/00

(54) **HERSTELLUNG VON NANO-PARTIKULÄREM TITANDIOXID**

(71) Anmelder: Kronos International, Inc., 51373 Leverkusen (DE)
(72) Erfinder: Krempels, Heinz-Christian, D-47802 Krefeld (DE)

(57) **Zusammenfassung**

Die Erfindung richtet sich auf die Herstellung von nano-partikulärem Titandioxid in Agglomeratform aus einer hydrolysierten sauren Titanylverbindung, welche mit Alkalisilikat oder Alkalialuminat neutralisiert und anschließend thermisch behandelt wird. Das Produkt enthält kristallines Titandioxid mit Anatasstruktur und Siliciumoxid und/oder Aluminiumoxid und weist eine spezifische Oberfläche (BET) von etwa 200 bis 400 m²/g auf. Es findet Verwendung als Photokatalysator, Prozesskatalysator oder Adsorptionsmittel insbesondere bei der Reinigung von wässrigen Systemen.

## Beschreibung

### Gebiet der Erfindung

Die Erfindung richtet sich auf die Herstellung von nano-partikulärem Titandioxid in Agglomeratform aus einer hydrolysierten sauren Titanylverbindung und die Verwendung als Photokatalysator, Prozesskatalysator oder Adsorptionsmittel insbesondere in wässrigen Systemen.

### Technologischer Hintergrund der Erfindung

Nano-partikuläres Titandioxid wird aufgrund seiner hohen spezifischen Oberfläche und seines Halbleitercharakters vielfach als Adsorptionsmittel oder als Prozess- oder Photokatalysator eingesetzt. Die kommerzielle Herstellung von nano-partikulärem Titandioxid erfolgt üblicherweise über die Hydrolyse einer sauren Titanylverbindung wie z.B. Titanylchlorid oder Titanylsulfat und die anschließende thermische Behandlung. Titanylsulfat wird beispielsweise durch schwefelsauren Aufschluss von Titan-Eisen-Rohstoffen wie Ilmenit-Erz hergestellt.
Im Falle von Titanylsulfat als Ausgangsverbindung wird das durch Hydrolyse des Thanylsulfats gebildete Titanoxidhydrat (Metatitansaure) aus der sauren Suspension abgetrennt und gewaschen, um andere Metallsalze und anhaftende Schwefelsäure zu entfernen. Weiterhin muss das Titanoxidhydrat neutralisiert werden, da trotz intensiver Waschung in der Regel noch 5 bis 10 Gew.-% chemisorbierte Schwefelsäure verbleiben. Die Neutralisation wird üblicherweise mit Hilfe von alkalischen Verbindungen wie Natriumhydroxid oder Calciumhydroxid durchgeführt (DE 103 92 330 B4, CN 104 209 108 A).
Bei der Neutralisation mit Calciumhydroxid (Kalkmilch) entsteht schwerlösliches Calciumsulfat, so dass als Produkt poröse Agglomerate aus Titandioxid und Calciumsulfat erhalten werden. Die Neutralisation mit Calciumhydroxid führt allerdings bei der Waschung zu Rissbildung im Filterkuchen und macht eine intensive Waschung des Filterkuchens unmöglich. Des Weiteren weist das entstandene Calciumsulfat eine Restlöslichkeit von Ca-Ionen in wässrigen Systemen auf.
Bei die Neutralisation mit Natriumhydroxid entsteht zwar leichtlösliches Natriumsulfat, das vollständig ausgewaschen werden kann, jedoch wird ein sehr feinteiliges, schwer zu handhabendes Titandioxid-Produkt erhalten.
Es besteht somit das Bedürfnis nach einem Neutralisationsverfahren für saures Titanoxidhydrat, das zu einem nano-partikulären agglomerierten Titandioxidprodukt führt, bei welchem ein gut auswaschbarer Filterkuchen und unlösliche Verbindungen entstehen.

### Aufgabenstellung und Kurzbeschreibung der Erfindung

Der Erfindung liegt die Aufgabe zugrunde, ein Neutralisationsverfahren für Schwefelsäurehaltiges Titanoxidhydrat, das zu einem nano-partikulären Titandioxidprodukt weiterverarbeitet werden soll, anzugeben, bei welchem unlösliche Verbindungen und ein gut auswaschbarer Filterkuchen entstehen.

Verfahren zur Herstellung von nano-partikulärem Titandioxid umfassend die Schritte:
- Bereitstellen einer wässrigen Lösung einer sauren Titanylverbindung,
- Hydrolyse der Titanylverbindung und Erzeugung einer Titanoxidhydrat-Suspension,
- Filtration der Suspension und Waschen des erhaltenen Titanoxidhydrat-Filterkuchens,
- Neutralisation des Filterkuchens,
- thermische Behandlung des Filterkuchens,
dadurch gekennzeichnet, dass
die Neutralisation durch Zugabe einer wässrigen Lösung von Alkalisilikat und/oder Alkalialuminat durchgeführt wird.

Weitere vorteilhafte Ausformungen der Erfindung sind in den Unteransprüchen angegeben.

### Beschreibung der Erfindung

Alle im Folgenden offenbarten Angaben bezüglich Größe in µm usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Im Rahmen der Erfindung wird unter "nano-partikuläres Titandioxid" Titandioxid mit einer primären Partikelgröße von maximal 100 nm verstanden.

Die Erfindung geht von einer wässrigen Lösung einer sauren Titanylverbindung aus. Als saure Titanylverbindung sind beispielsweise Titanylsulfat oder Titanoxychlorid geeignet. Besonders bevorzugt ist Titanylsulfat.
In einer besonderen Ausführung der Erfindung wird von einer Titanylsulfat-Lösung ausgegangen, die durch schwefelsauren Aufschluss von Titan-Eisen-Rohstoff wie Ilmeniterz hergestellt wurde. Eine solche Titanylsulfat-Lösung entsteht beispielsweise im Verlaufe des bekannten Verfahrens zur Herstellung von Titandioxid-Pigment nach dem Sulfatverfahren. In der Titanylsulfat-Lösung werden die wasserlöslichen Salze wie z.B. Eisensulfat auskristallisiert und abgetrennt.

Anschließend wird die Titanylverbindung hydrolysiert und Titanoxidhydrat gefällt. Das gefällte mikrokristalline Titanoxidhydrat wird per Filtration abgetrennt und der Filterkuchen gewaschen und neutralisiert.

Erfindungsgemäß erfolgt die Neutralisation des Filterkuchens mit einer Alkalisilikatlösung (Wasserglas) und/oder einer Alkalialuminatlösung. Die Alkalisilikatlösung enthält bevorzugt Natriumsilikat und/oder Kaliumsilikat und/oder Lithiumsilikat in einer Konzentration von 2 bis 20 Mol%. Die Alkalialuminatlösung enthält bevorzugt Natriumaluminat in einer Konzentration von 2 bis 20 Mol%.
Im Rahmen der Erfindung bedeutet Neutralisation, dass ein pH-Wert im Bereich von 4 bis 9 eingestellt wird.

Die Neutralisation findet beispielsweise in einem Gefäß statt, in dem der gewaschene Filterkuchen, gegebenenfalls mit Wasser verdünnt, unter Rühren mit der Alkalisilikat- oder Natriumaluminatlösung versetzt wird.
Im Falle der Verwendung von Titanylsulfat, das aus dem Sulfatverfahren zur Herstellung von Titandioxid stammt, weist der gewaschene Filterkuchen des Hydrolyseprodukts Titanoxidhydrat vor der Neutralisation üblicherweise einen pH-Wert von 1 bis 2 auf.

Bei der Neutralisation mit Alkalisilikat entstehen als Reaktionsprodukte leicht lösliches und gut auswaschbares Alkalisulfat (Natriumsulfat, Kaliumsulfat, Lithiumsulfat, etc.) und unlösliches Siliciumoxid. Bei der Neutralisation mit Natriumaluminat entstehen als Reaktionsprodukte leicht lösliches und gut auswaschbares Natriumsulfat und unlösliches Aluminiumoxid.
Das Alkalisilikat bzw. Natriumaluminat wird in einer Menge zugegeben, dass sich ein pH-Wert von 4 bis 9, bevorzugt 7 bis 8 einstellt.
Die Temperatur liegt im Bereich von Raumtemperatur bis 80°C, bevorzugt Raumtemperatur bis 60°C.

In einer besonderen Ausführung der Erfindung findet die Neutralisation hydrothermal unter erhöhten Druck- und Temperaturbedingungen statt.

Im Anschluss wird das neutralisierte Titandioxid filtriert, gewaschen und thermisch behandelt. Die thermische Behandlung findet in dem Fachmann bekannten Aggregaten statt, wie beispielsweise Sprühtrockner, Bandtrockner oder Etagentrockner. Die Temperatur liegt bei etwa 100°C bis 140°C. Es entsteht ein nano-partikuläres kristallines Titandioxid-Produkt mit Anatasstruktur.
Alternativ kann das neutralisierte, filtrierte und gewaschene Titandioxid, gegebenenfalls unter Einsatz eines zusätzlichen Bindemittels, mittels eines Extruders granuliert und getrocknet werden.

Das getrocknete Produkt weist Agglomeratstruktur auf und enthält nano-partikuläres Titandioxid und das Neutralisationsprodukt Siliciumoxid und/oder Aluminiumoxid. Die Agglomeratgröße beträgt je nach Trocknungsverfahren mindestens etwa 500 µm, bevorzugt 500 µm bis mehrere mm, insbesondere bevorzugt 500 µm bis 10 mm und am bevorzugtesten 500 µm bis 5 mm. Die spezifische Oberfläche nach BET liegt bei etwa 200 bis 400 m²/g, bevorzugt 200 bis 300 m²/g.
Die getrockneten Agglomerate können in üblicher Art und Weise in Wasser oder einem Lösemittel dispergiert werden, wobei sich die Agglomeratgröße auf 1 bis 5 µm verringert.

Das erfindungsgemäße nano-partikuläre Titandioxidprodukt zeichnet sich durch eine hohe Adsorptionsfähigkeit für Schwermetalle und polare Verbindungen aus.
Es ist geeignet als Photokatalysator, Prozesskatalysator oder Adsorptionsmittel und findet bevorzugt in den Bereichen Gasreinigung und insbesondere bei der Reinigung von wässrigen Systemen Verwendung.

## Patentansprüche

1. Verfahren zur Herstellung von nano-partikulärem Titandioxid umfassend die Schritte:
- Bereitstellen einer wässrigen Lösung einer sauren Titanylverbindung,
- Hydrolyse der Titanylverbindung und Erzeugung einer Titanoxidhydrat-Suspension,
- Filtration der Suspension und Waschen des erhaltenen Titanoxidhydrat-Filterkuchens,
- Neutralisation des Filterkuchens,
- thermische Behandlung des Filterkuchens,
**dadurch gekennzeichnet, dass**
die Neutralisation durch Zugabe einer wässrigen Lösung von Alkalisilikat und/oder Alkalialuminat durchgeführt wird.

2. Verfahren nach Anspruch 1 **dadurch gekennzeichnet, dass**
die Neutralisation durch Zugabe einer wässrigen Lösung von Natriumsilikat und/oder Natriumaluminat durchgeführt wird.

3. Verfahren nach Anspruch 1 oder 2 **dadurch gekennzeichnet, dass** die wässrige Lösung eine Konzentration von 2 bis 20 Mol% aufweist.

4. Verfahren nach einem oder mehreren der Ansprüche 1 bis 3 **dadurch gekennzeichnet, dass**
nach der Neutralisation ein pH-Wert von 4 bis 9, bevorzugt 7 bis 8 eingestellt ist.

5. Verfahren nach einem oder mehreren der Ansprüche 1 bis 4 **dadurch gekennzeichnet, dass**
die saure Titanylverbindung Titanylsulfat ist, bevorzugt erhalten im Verlaufe des Sulfatverfahrens zur Herstellung von Titandioxid.

6. Verfahren nach einem oder mehreren der Ansprüche 1 bis 5 **dadurch gekennzeichnet, dass**
das nano-partikuläre Titandioxid in Agglomeratform mit einer Agglomeratgröße von mindestens 500 µm bevorzugt 500 µm bis 10 mm vorliegt.

7. Verfahren nach einem oder mehreren der Ansprüche 1 bis 6 **dadurch gekennzeichnet, dass**
das nano-partikuläre Titandioxid in Agglomeratform mit einer spezifischen Oberfläche nach BET von 200 bis 400 m²/g vorliegt.

8. Verfahren nach einem oder mehreren der Ansprüche 1 bis 7 **dadurch gekennzeichnet, dass**
das nano-partikuläre Titandioxid in Wasser oder einem Lösemittel dispergiert wird.

9. Verfahren nach Anspruch 8 **dadurch gekennzeichnet, dass**
das dispergierte nano-partikuläre Titandioxid eine Agglomeratgröße von 1 bis 5 µm aufweist.

10. Verwendung des nanopartikulären Titandioxids gemäß einem oder mehreren der Ansprüche 1 bis 9 als Adsorptionsmittel, Photokatalysator oder Prozesskatalysator.
